# EUROPÄISCHE PATENTSCHRIFT

(11) **EP 0 849 859 B1**
(45) Veröffentlichungstag und Bekanntmachung des Hinweises auf die Patenterteilung: **24.10.2001**
(21) Anmeldenummer: 97810949.4
(22) Anmeldetag: 05.12.1997
(51) Int. Cl.: H02K 1/32, F04D 29/38

(54) **Rotor eines Turboladers mit direkter Gaskühlung**
Rotor of a turbogenerator with direct gas cooling
Rotor d'un turbo genérateur avec refroidissement direct à gaz

(30) Priorität: 21.12.1996 DE 19653839
(43) Veröffentlichungstag der Anmeldung: 24.06.1998
(73) Patentinhaber: Asea Brown Boveri AG, 5401 Baden (CH)
(72) Erfinder: Stefan, Ernö, 5200 Brugg (CH)
(74) Vertreter: ABB Patent Attorneys

(56) Entgegenhaltungen:
- DD-A- 120 981
- DE-A- 3 807 277

## Beschreibung

### TECHNISCHES GEBIET

Die Erfindung betrifft einen Rotor eines Turbogenerators mit direkter Gaskühlung, wie er im Oberbegriff des ersten Anspruchs beschrieben ist.

Ein Rotor eines Turbogenerators mit direkter Gaskühlung ist beispielsweise aus der DD 120 981 bekannt.

### TECHNOLOGISCHER HINTERGRUND UND STAND DER TECHNIK

Bei Generatoren, die nach dem Druckkühlungsprinzip betrieben werden, ermöglicht ein Hauptventilator eine drallbehaftete Einströmung der Kühlluft in den Wickelkopfraum der Polzone des Rotors. Das heisst, dass der Restdrall der Luft am Austritt des Hauptventilators dafür sorgt, dass die Luft nahezu ohne Schlupf vor der Polzone des Rotors rotiert. Das Einströmen von Kühlluft in die dafür vorgesehenen vorwiegend axialen Kühlkanäle des Rotors und der Rotorwicklung ist somit beim Druckkühlprinzip unproblematisch.

Um zusätzlich den Kühlmitteldurchsatz im Rotor zu erhöhen, wird in der DD 120 981 vorgeschlagen, bei im Druckkühlungsprinzip gekühlten Generatoren, die Kühlung des Rotors und dessen Wicklung mittels zusätzlichem Laufschaufelgitter unter der Rotorkappe zu forcieren. Dieses Laufschaufelgitter vermag die trotz Restdrall der Kühlluft verbleibenden, sogenannten Stossverluste beim Eintritt der Kühluft in die im wesentlichen axial verlaufenden Rotorkühlkanäle weiter zu reduzieren, so dass die Kühlung des Rotors optimiert und die Gesamtverluste reduziert werden.

Im Gegensatz hierzu leiten die Hauptventilatoren von im Saugkühlprinzip arbeitenden Generatoren die Kühlluft zunächst zu einem Kühler, wobei der Restdrall der Kühlluftströmung verwirbelt wird. Generell bietet die Saugkühlung gegenüber der Druckkühlung den Vorteil, dass die die Kühler verlassende Luft unmittelbar den Kühlkanälen im gesamten Generator zugeführt werden kann und die durch den Maschinenventilator verursachte Temperaturerhöhung eliminiert ist. Allerdings wird auf diese Weise dem Rotor Kühlluft ohne den erforderlichen Drall zugeführt. Der Rotor muss die Kühlluft zunächst auf Umfangsgeschwindigkeit beschleunigen, bevor sie in die Kühlkanäle eintreten kann. Der Rotor muss somit die gesamte Arbeit leisten, um die bereits erwähnten Stossverluste zu überwinden. Hierbei kann es zur Ablösung der Kühlgasströmung kommen, und es können die Rotorteilleitereintritte fehlangeströmt werden. Die Folge ist dann eine stark eingeschränkte Kühlluftverteilung mit entsprechender Gefährdung der gesamten Rotorwicklung.

Die Verwendung eines Laufschaufelgitters gemäss DD 120 981 vermag zwar dieses vor allem bei Saugkühlung auftretende Problem bei der Rotorkühlung zu reduzieren, sie ist aber ausserstande, den heutigen Anforderungen bei der Kühlung von Rotoren in Grenzleistungsmaschinen gerecht zu werden. Hierbei kann nämlich eine Umlenkung der Kühlgasströmung bis zu 70° bei axialer Umlenkung nötig sein, was bei einer nach dem Stand der Technik vorgeschlagenen Schaufelreihe zum Ablösen der Strömungsgrenzschicht an der Schaufelwand führen würde.

### DARSTELLUNG DER ERFINDUNG

Aufgabe der Erfindung ist es, einen Rotor eines Turbogenerators mit direkter Gaskühlung der eingangs genannten Gattung zu schaffen, der vorzugsweise unter Saugkühlung betrieben wird und optimal gekühlt werden kann.

Erfindungsgemäss wird diese Aufgabe durch die Merkmale des ersten Anspruchs gelöst.

Die Vorteile der Erfindung sind unter anderem darin zu sehen, dass durch ein zweistufiges Strömungsgitter zum einen in einer ersten Stufe im wesentlichen eine gewünschte Druckerhöhung des Kühlmittelstromes erzwungen wird, und zum anderen in einer zweiten Stufe im wesentlichen die erforderliche Umlenkung des Kühlmittelstromes durchgeführt wird, wobei sich ein Deckband durch Fliehkräfte bei Rotation an der radialen Innenseite des Strömungsgitters dichtend anlegt. Erst eine derartige funktionale Trennung zwischen Druckerhöhung und Umlenkung der Kühlmittelströmung in Verbindung mit der dichtenden Eigenschaft des Deckbandes gewährleistet eine optimale, mit geringsten Stossverlusten versehenen Anströmung der im Rotorkörper und in der Rotorwicklung vorhandenen Kühlkanäle bei Anwendung des Saugkühlprinzips.

Bei einer besonders bevorzugten Ausführungsform der Erfindung ist vorgesehen, dass die erste Stufe des Strömungsgitters mit vorwiegend druckerzeugenden Eigenschaften dem Hauptventilator der elektrischen Maschine zugewandt ist, und die zweite Stufe des Strömungsgitters mit vorwiegend Umlenkeigenschaften dem Rotorwickelkopf zugewandt ist. Hierbei sind die Strömungsgitter in axialer Richtung voneinander separiert, dass heisst, dass sie einander in axialer Richtung nicht überlappen.

Eine besonders vorteilhafte Wirkung der verbesserten Kühlmittelströmungsführung und damit der Kühlung des Rotors stellt sich ein, wenn die die Kühlmittelströmung begrenzenden Wände zwischen dem Innenrand der Rotorkappenplatte und der Rotorwelle eine zum Rotorwickelkopf hin konisch zusammenlaufende Kontur aufweisen. Eine sogenannte meridionale Konturierung des Strömungskanals ermöglicht bei maximaler Druckerhöhung die gewünschte Umlenkung unter Berücksichtigung minimaler Strömungsverluste.

### KURZE BESCHREIBUNG DER ZEICHNUNG

Die Erfindung wird nachstehend anhand eines Ausführungsbeispiels näher erläutert. In der Zeichnung zeigt
- Fig. 1: einen vereinfachten Längsschnitt durch einen luftgekühlten Turbogenerators mit geschlossenem Kühlkreislauf nach dem Saugkühlprinzip;
- Fig. 2: eine etwas detailliertere, vergrösserte Längsschnittdarstellung der Einzelheit X nach Fig. 1;
- Fig. 3: die Einzelheit X nach Fig. 1 in einer weiteren Längsschnittdarstellung;
- Fig. 4: eine teilweise Abwicklung einer Gasleitringes mit Strömungsgitter;
- Fig.5: perspektivische Schnittdarstellung des Gasleitringes mit Strömungsgitter und Deckband.

Es sind nur die für das Verständnis der Erfindung wesentlichen Elemente gezeigt.

### WEG ZUR AUSFÜHRUNG DER ERFINDUNG

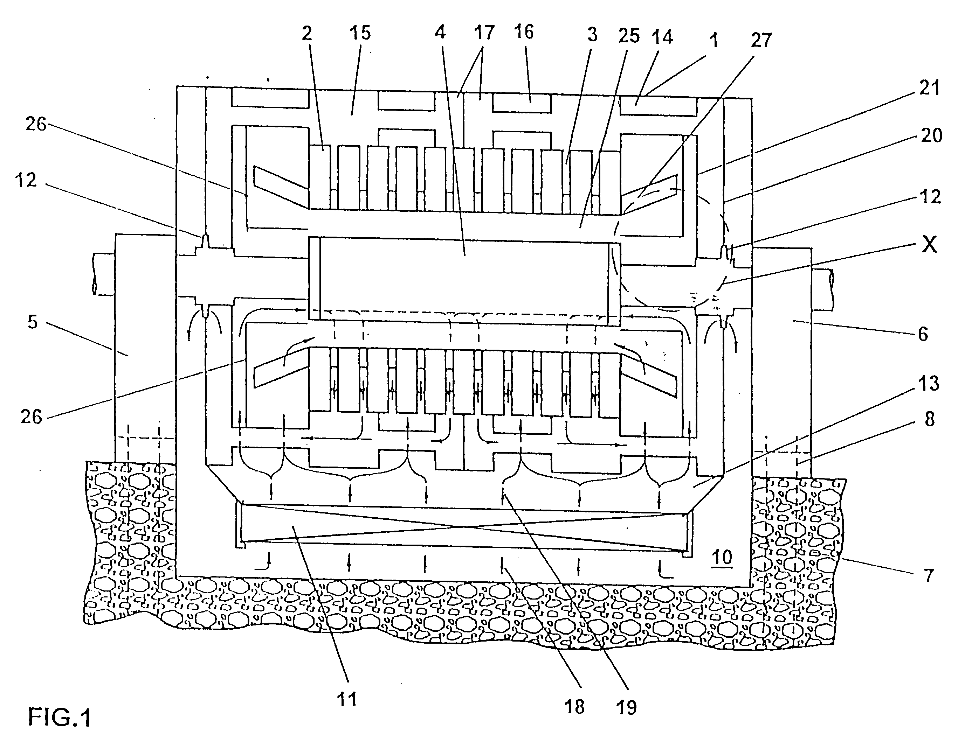

Der in Fig. 1 dargestellte luftgekühlte Turbogenerator weist ein Maschinengehäuse 1 auf, das einen aus Teilblechkörpern 2 bestehenden Statorblechkörper einschliesst. Im Statorblechkörper sind radiale Belüftungsschlitze 3 zwischen den einzelnen Teilblechkörpern 2 vorgesehen. Ein Rotor 4 ist in Bocklagern 5, 6 gelagert, die auf dem Fundament 7 mittels Zugankern 8 befestigt sind.

Das Fundament 7 weist eine Fundamentgrube 10 auf, die sich axial über die gesamte Länge des Maschinengehäuses 1 erstreckt und nahezu die gesamte Breite des Gehäuses 1 einnimmt. In dieser Fundamentgrube 10 ist eine Kühlanordnung 11 der Maschine angeordnet. Dabei stehen die Eintrittsöffnungen der Kühlanordnung 11 mit Ausströmräumen von beiderseits des Rotors 4 angeordneten Hauptventilatoren 12 in Verbindung und die Austrittsöffnungen der Kühlanordnung 11 münden in einen Ausgleichsraum 13. Das die Kühlanordnung 11 durchströmende Kühlgas ist mittels Pfeilen dargestellt, wobei einströmendes Heissgas mit 18 und ausströmendes Kaltgas mit 19 bezeichnet ist. Alle weiteren nicht näher bezeichneten Pfeile zeigen den Kühlkreislauf des Kühlgases auf. Der Kühlkreislauf ist lediglich in einer Maschinenhälfte durch Pfeile kenntlich gemacht, da hinsichtlich der Kühlung die Maschine symmetrisch aufgebaut ist.

Bei dem Kühlprinzip handelt es sich um eine sogenannte Revers- oder Saugkühlung, bei der Heissgas 18 mittels Ventilatoren 12 der Kühlanordnung 11 zugeführt wird. Der Kühlgasstrom verteilt sich im Ausgleichsraum 13 auf die Kaltgaskammern 14 und 16, wobei sich Teilströmungen ausbilden. Ein erster Teilstrom strömt zwischen Leitblechen 26 und einer Innenverschalung 21 direkt zum Rotor 4, ein zweiter strömt durch den Wickelkopf 27 in den Maschinenluftspalt 25, und ein dritter Kühlgasstrom gelangt durch die Kaltgaskammern 16 und Belüftungsschlitze 3 in den Luftspalt 25. Aus letzterem wird der Kühlgasstrom von den Ventilatoren 12 durch Belüftungsschlitze 3 und die Heissgaskammern 15 und 17 zwischen die Innenverschalung 21 und eine Aussenverschalung 20 gesaugt und anschliessend durch die Fundamentgrube 10 zu den Kühlern 11 geführt.

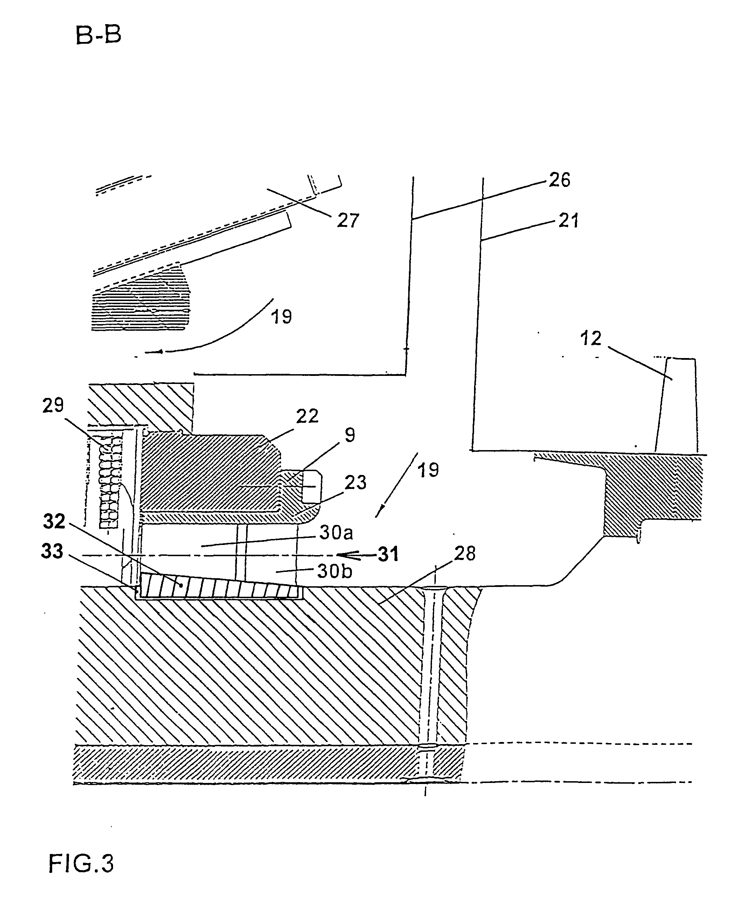

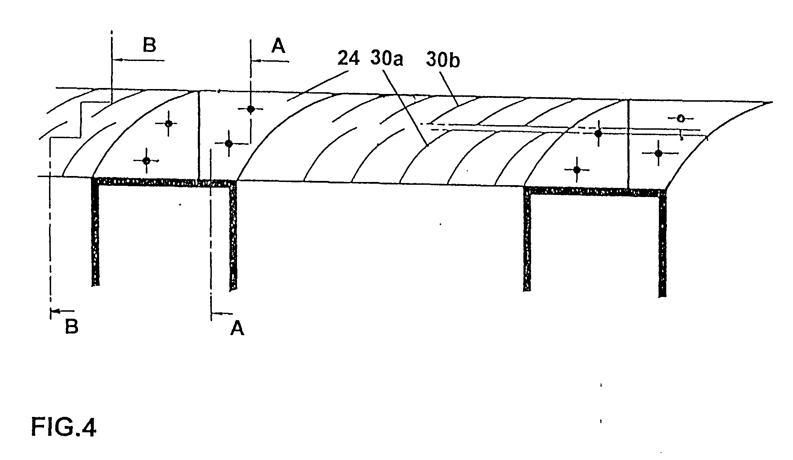

Fig. 3 zeigt in einer vergrösserten und damit detaillierteren Schnittdarstellung den Bereich der Kühlgaszuführung zum Rotor 4. Die Kühlluft 19 strömt zwischen dem Leitblech 26 und der Innenverschalung 21 zu einem Kühllufteinströmkanal 31, der zwischen einer Rotorwelle 28 und einem Gasleitring 23 gebildet wird. Dieser Strömungskanal 31 weist in Strömungsrichtung zu einer Rotorwicklung 29 hin ein zweistufiges Strömungsgitter 30a, 30b, wobei jede Strömungsgitterstufe jeweils eine Anzahl von am Innenumfang des Gasleitringes 23 angeordneten Laufschaufeln aufweist. Dabei sind die Strömungsgitterstufen 30a, 30b in axialer Richtung des Rotors 4 derart voneinander beabstandet, dass sie sich nicht überlappen (vgl. auch Fig.4). Die dem Ventilator 12 zugewandte Strömungsgitterstufe 30b ist als eine Verzögerungsstufe mit im wesentlichen druckerzeugenden Eigenschaften ausgeführt, und die in Strömungsrichtung folgende, der Rotorwicklung 29 zugewandten Strömungsgitterstufe 30a ist als Verzögerungsstufe mit im wesentlichen umlenkenden Eigenschaften ausgeführt. Zur weiteren Optimierung der Kühlmitteleinströmung 31 in den Rotor 4 ist der Strömungskanal 31 radial innen des Strömungsgitters 30a, 30b mit einem gegenüber der Kühlmittelströmung dichtenden Deckband 32 versehen. Dieses Deckband 32 ist in einer umlaufenden Ringnut 33 des Rotors 28 eingelegt und somit gegen axiales Verschieben gesichert.

Das in der Fig.3 dargestellte Ausführungsbeispiel zeigt zudem eine besondere Ausgestaltung des Deckbandes 32 derart, dass der Strömungskanal 31 zur Rotorwicklung 29 hin konisch zulaufend ausgeformt ist. Eine derartige sogenannte meridionale Konturierung des Strömungskanals 31 ermöglicht bei zweistufiger maximaler Druckerhöhung und gewünschter Umlenkung minimale Strömungsverluste.

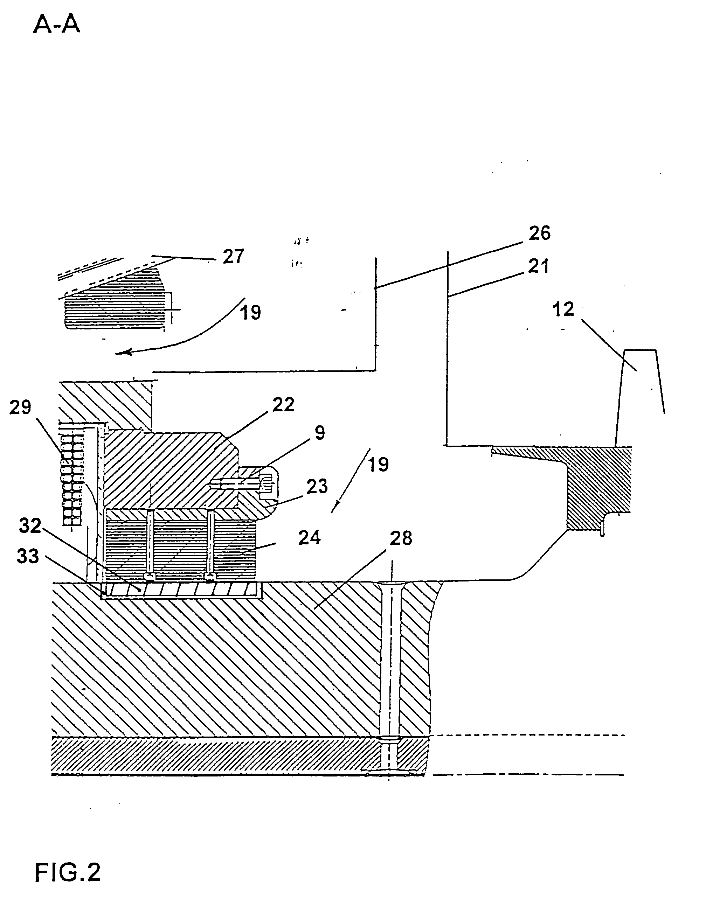

Ohne den Erfindungsgedanken zu verlassen, ist ebenfalls denkbar zusätzlich oder ausschliesslich eine Konturierung des Gasleitringes 23 vorzunehmen oder aber auch von jeglicher Konturierung abzusehen und somit einen Strömungskanal 31 konstanten Querschnitts zu schaffen. Der zuletzt genannte Fall ist beispielhaft in Fig.2 gezeigt.

Betrachtet man die teilweise Abwicklung des Innenumfangs des Gasleitringes 23 in Fig. 4, so sind hier in regelmässigen Abständen Füllstücke 24 zwischen benachbarten Laufschaufeln der einzelnen Strömungsgitterstufen vorgesehen, wobei diese Füllstücke 24 entsprechend der Schaufelkontur der Strömungsgitterstufen 30a, 30b ausgeformt sind. Eine Längsschnittdarstellung durch ein Füllstück 24 gemäss der gestuften Schnittlinie A-A in Fig.4 zeigt die Fig. 2.

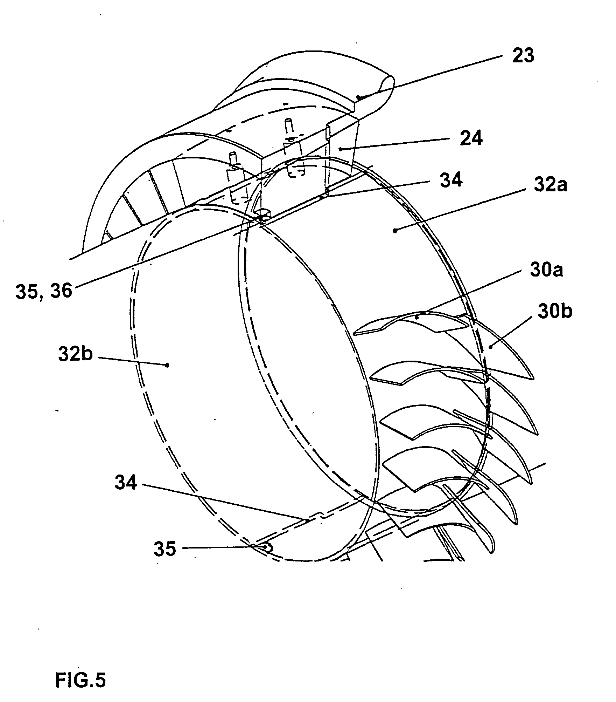

Der Gasleitring 23 liegt in axialer Richtung mit einem Flansch an einer Rotorkappenplatte 22 an und ist mit dieser, wie in Fig. 2 dargestellt, mittels Schrauben 9 verbunden. Um eine einfache Montage und gegebenenfalls Demontage des Gasleitringes 23 zu gewährleisten, ist dieser zweiteilig, also als zwei Halbringe ausgeführt. Ebenfalls zweigeteilt ist das Deckband 32, wie Fig.5 erhellt. Im Bereich der Füllstücke 24 sind sowohl der Gasleitring 23 als auch das Deckband 32a, 32b entlang zweier Schnittlinien 34 oben und unten geteilt. Die Schnittlinie 34 ist dabei in axialer Richtung gestuft, womit eine dichtende Wirkung gegenüber einer axialen Kühlmittelströmung erreicht wird. Die Füllstücke 24 und die Deckbandhälften 32a, 32b weisen einander gegenüberliegende Ausnehmungen 36 und 35 auf, in die Sicherungsmittel, wie beispielsweise Stifte, gegen Verdrehen der Deckbandhälften 32a, 32b in Umfangsrichtung eingesetzt sind.

Durch die Verwendung der beschriebenen Schaufelgitterstufen in Verbindung mit dem dichtenden Deckband wird eine entscheidende Verminderung der Stossverluste bei der Kühlmittelanströmung in Rotoren erzielt, wobei mit höherem Kühlmitteldruck eine optimale Anströmung aller Rotorkühlkanäle erfolgt. Gegenüber dem Stand der Technik kann ein bis zu 40% gesteigerter Kühlmitteldurchsatz erzielt werden.

Denkbar im Sinn der Erfindung wäre beispielsweise auch eine Schaufelgitteranordnung mit mehr als zwei Schaufelgitterstufen.

### BEZEICHNUGSLISTE

- 1: Maschinengehäuse
- 2: Teilblechkörper
- 3: Belüftungsschlitze
- 4: Rotor
- 5, 6: Bocklager
- 7: Fundament
- 8: Zuganker
- 9: Schraube
- 10: Fundamentgrube
- 11: Kühlanordnung
- 12: Hauptventilator
- 13: Ausgleichsraum
- 14, 16: Kaltgaskammer
- 15, 17: Heissgaskammer
- 18: Heissluft vor 11
- 19: Kaltluft nach 11
- 20: Aussenverschalung
- 21: Innenverschalung
- 22: Rotorkappenplatte
- 23: Gasleitring
- 24: Füllstück
- 25: Luftspalt
- 26: Leitbleche
- 27: Wickelkopf
- 28: Rotorwelle
- 29: Rotorwickelkopf
- 30a, b: Strömungsgitter
- 31: Strömungskanal
- 32, 32a,b: Deckband
- 33: Ringnut
- 34: Schnittlinie
- 35, 36: Ausnehmung

## Patentansprüche

1. Rotor (4) eines Turbogenerators mit direkter Gaskühlung, der in einem als Ringspalt ausgebildeten Strömungskanal (30) zwischen einem Innenrand einer Rotorkappenplatte (22) und einer Rotorwelle (28) ein Strömungsgitter (30a, 30b) aufweist,
**dadurch gekennzeichnet,**
**dass** das Strömungsgitter (30a, 30b) mindestens zweistufig ausgeführt ist, wobei eine erste Stufe des Strömungsgitters (30b) ein Verzögerungsgitter mit überwiegend druckerzeugenden Eigenschaften ist, und
**dass** eine zweite Stufe des Strömungsgitters (30a) ein Verzögerungsgitter mit überwiegend Umlenkeigenschaften ist,
wobei das Strömungsgitter (30a, 30b) radial innen mit einem den Strömungskanal (31) begrenzenden Deckband (32) versehen ist.

2. Rotor (4) nach Anspruch 1,
**dadurch gekennzeichnet,**
**dass** die erste Stufe des Strömungsgitters (30b) mit überwiegend druckerzeugenden Eigenschaften einem Hauptventilator zugewandt ist,
und **dass** die zweite Stufe des Strömungsgitters (30a) mit überwiegend Umlenkeigenschaften einem Rotorwickelkopf (29) zugewandt ist.

3. Rotor nach Anspruch 1 oder 2,
**dadurch gekennzeichnet,**
**dass** die erste Stufe und die zweite Stufe des Strömungsgitters (30a, 30b) sich in axialer Richtung des Rotors (4) nicht überlappen.

4. Rotor nach Anspruch 1,
**dadurch gekennzeichnet,**
**dass** der Strömungskanal (31) zwischen dem Innenradius der Rotorkappenplatte (22) und der Rotorwelle (28) eine zum Rotorwickelkopf (27) hin konisch zusammenlaufende Kontur aufweist.

5. Rotor nach Anspruch 4,
**dadurch gekennzeichnet,**
**dass** das Deckband (32) kegelstumpfförmig ausgebildet ist, so dass der Strömungskanal (31) zum Rotorwickelkopf (27) hin eine konisch zusammenlaufende Kontur aufweist.

6. Rotor nach Anspruch 1,
**dadurch gekennzeichnet,**
**dass** das Deckband (32) mindestens zweiteilig (32a,b) ist, wobei die Schnittlinie (34) zwischen den beiden Deckbandhälften (32a,b) in axialer Richtung einen gestuften Verlauf aufweist.

## Claims

1. Rotor (4) of a turbogenerator having direct gas cooling, which has a flow cascade (30a, 30b) in a flow duct (30) constructed as an annular gap, between an inner edge of a rotor cap plate (22) and a rotor shaft (28), **characterized in that** the flow cascade (30a, 30b) is of at least two-stage design, a first stage of the flow cascade (30b) being a deceleration cascade having predominantly pressure-generating properties, and **in that** a second stage of the flow cascade (30a) is a deceleration stage having predominantly deflecting properties, the flow cascade (30a, 30b) being provided radially on the inside with a shroud band (32) bounding the flow duct (31).

2. Rotor (4) according to Claim 1, **characterized in that** the first stage of the flow cascade (30b) having predominantly pressure-generating properties faces a main fan, and **in that** the second stage of the flow cascade (30a) having deflecting properties faces a rotor winding overhang (29).

3. Rotor according to Claim 1 or 2, **characterized in that** the first stage and the second stage of the flow cascade (30a, 30b) do not overlap in the axial direction of the rotor (4).

4. Rotor according to Claim 1, **characterized in that** between the inside radius of the rotor cap plate (22) and the rotor shaft (28), the flow duct (31) has a contour tapering conically towards the rotor winding overhang (27).

5. Rotor according to Claim 4, **characterized in that** the shroud band (32) is constructed in the shape of a conical frustum such that the flow duct (31) has a contour tapering conically towards the rotor winding overhang (27).

6. Rotor according to Claim 1, **characterized in that** the shroud band (32) is at least in two parts (32a, b), the line of section (34) between the two shroud band halves (32a, b) having a stepped course in the axial direction.

## Revendications

1. Rotor (4) d'un turbo-alternateur avec refroidissement direct par gaz, lequel présente une grille d'écoulement (30a, 30b) dans un canal d'écoulement (30) réalisé sous la forme d'une fente annulaire entre un bord intérieur d'une plaque de chapeau de rotor (22) et un arbre de rotor (28), **caractérisé en ce que** la grille d'écoulement (30a, 30b) est réalisée au moins en deux étages, un premier étage de la grille d'écoulement (30b) étant une grille de ralentissement ayant essentiellement des propriétés de production de pression et un deuxième étage de la grille d'écoulement (30a) étant une grille de ralentissement ayant essentiellement des propriétés de déviation, la grille d'écoulement (30a, 30b) étant munie à l'intérieur dans le sens radial d'un anneau de renfort (32) qui délimite le canal d'écoulement (31).

2. Rotor selon la revendication 1, **caractérisé en ce que** le premier étage de la grille d'écoulement (30b) ayant essentiellement des propriétés de production de pression est dirigé vers un ventilateur principal et que le deuxième étage de la grille d'écoulement (30a) ayant essentiellement des propriétés de déviation est dirigé vers une tête de bobine de rotor (29).

3. Rotor selon la revendication 1 ou 2, **caractérisé en ce que** le premier étage et le deuxième étage de la grille d'écoulement (30a, 30b) ne se chevauchent pas dans le sens axial du rotor (4).

4. Rotor selon la revendication 1, **caractérisé en ce que** le canal d'écoulement (31) présente entre le rayon intérieur de la plaque du chapeau de rotor (22) et l'arbre du rotor (28) un profilage de contour qui se rétrécit de manière conique en direction de la tête de bobine du rotor (27).

5. Rotor selon la revendication 4, **caractérisé en ce que** l'anneau de renfort (32) a une forme tronconique de manière à ce que le canal d'écoulement (31) présente un profilage de contour de forme conique en direction de la tête de bobine du rotor (27).

6. Rotor selon la revendication 1, **caractérisé en ce que** l'anneau de renfort (32) se compose au moins de deux parties (32a, b), la ligne de coupe (34) entre les deux moitiés de l'anneau de renfort (32a, b) présentant un tracé étagé dans le sens axial.
